# FASCICULE DE BREVET EUROPEEN

(11) **EP 0 928 675 B1**
(45) Date de publication et mention de la délivrance du brevet: **05.09.2001**
(21) Numéro de dépôt: 99420002.0
(22) Date de dépôt: 08.01.1999
(51) Int. Cl.: B29C 45/16, A63F 7/06

(54) **Joueur de jeu de table du type baby-foot, jeu de table comprenant un tel joueur, procédé et installation de moulage d'un tel joueur**
Tischfussballspieler, Tischspiel mit einem solchen Spieler, Verfahren und Formvorrichtung für einen solchen Spieler
Table football game player, table game with such a player, method and moulding apparatus for such a player

(30) Priorité: 12.01.1998 FR 9800387
(43) Date de publication de la demande: 14.07.1999
(73) Titulaire: SMOBY, F-39170 Lavans les Saint Claude (FR)
(72) Inventeur: Breuil, Jean-Christophe, 39170 Lavans les Saint Claude (FR)
(74) Mandataire: Myon, Gérard Jean-Pierre

(56) Documents cités:
- EP-A- 0 147 571
- DE-A- 4 408 426
- GB-A- 1 565 655
- GB-A- 2 084 508
- US-A- 5 641 163
- PATENT ABSTRACTS OF JAPAN vol. 5, no. 135 (M-85), 27 août 1981 & JP 56 069138 A (FURUYA KOGYO KK), 10 juin 1981

## Description

L'invention a trait à un joueur de jeu de table du type baby-foot, à un procédé et à une installation de moulage de joueurs de ce type et à un jeu équipé de tels joueurs.

Dans les installations connues, on moule en une opération les corps de plusieurs joueurs de baby-foot à partir de matière plastique telle que du polypropylène. Il est alors possible de surmouler, sur chaque corps, des éléments décoratifs en couleur tels que le maillot et les chaussettes de la tenue du joueur, qui sont de couleurs différentes selon les équipes constituées sur le jeu, ou la peau du visage et des cuisses du joueur.

Le corps ainsi moulé en une opération a une épaisseur maximale de l'ordre de 20 mm, de sorte que le temps de refroidissement qui doit être observé entre le moulage du corps et le surmoulage des éléments décoratifs est relativement long. En pratique, le temps de cycle de fabrication d'une série de joueurs de baby-foot classiques est supérieur à une minute.

Or, si l'on désire augmenter les cadences de production des joueurs dans une installation industrielle, ce temps de cycle d'une minute crée une barrière rédhibitoire à l'augmentation des quantités produites journellement.

C'est à ce problème qu'entend plus particulièrement remédier l'invention en proposant un joueur de baby-foot, une installation et un procédé de moulage qui permettent de diminuer fortement les temps de cycle de fabrication de ces joueurs. L'invention vise en outre à diminuer les coûts de fabrication de ces joueurs, tant par la réduction du temps de cycle que par la réduction du coût de la matière utilisée. Enfin, l'invention a trait à un jeu de type baby-foot dont le prix de revient est diminué du fait de la diminution du prix de revient des joueurs qu'il comprend.

Dans cet esprit, l'invention concerne un procédé de moulage de joueurs de jeu de table du type baby-foot, caractérisé en ce qu'il consiste à mouler une armature de joueur, à partir de matière plastique recyclée, et à surmouler une enveloppe de couleur déterminée sur l'armature, de façon à recouvrir complètement cette armature.

Grâce à l'invention, le fait d'utiliser une armature en matière plastique recyclée permet de diminuer le coût de la matière utilisée car la matière plastique recyclée peut être achetée à moindre coût, voire récupérée sur une autre partie de la chaîne de production sur un site industriel suite à un ébarbage ou à un ébavurage de pièces en matière plastique ou à la ré-utilisation de rebuts de production. En outre, la fabrication du corps de chaque joueur en une armature et une enveloppe permet de réaliser des éléments dont l'épaisseur est bien inférieure à celle des corps de joueurs de l'art antérieur, de sorte que le temps de refroidissement de l'armature d'une part et de l'enveloppe d'autre part est très inférieur au temps de refroidissement du corps des joueurs de l'art antérieur. Ceci permet de diminuer sensiblement le temps de cycle de production des joueurs dans la mesure où les opérations de surmoulage de l'enveloppe sur l'armature, voire du surmoulage des éléments décoratifs sur cette enveloppe, peuvent être réalisées en temps masqué par rapport à l'opération de moulage de l'armature ou du noyau de l'armature, si cette armature est elle-même constituée d'une structure multi-couches. En pratique, il s'est avéré que le procédé de l'invention permet d'obtenir un temps de cycle de l'ordre de 25 secondes, ce qui permet d'augmenter très sensiblement les cadences de production.

L'invention concerne également un joueur de jeu de table du type baby-foot réalisé conformément au procédé précédemment décrit et, plus spécifiquement, un joueur caractérisé en ce qu'il est constitué d'une structure multi-couches comprenant une armature moulée à partir de matière recyclée, et une enveloppe surmoulée sur cette armature et recouvrant complètement cette armature.

Le joueur ainsi constitué est formé de couches successives, telles que l'armature et l'enveloppe, dont l'épaisseur est assez faible pour que leur refroidissement soit de courte durée, de sorte qu'il est possible de procéder à des opérations de surmoulage ultérieures très rapidement après la formation de chacune de ces couches.

Selon un premier aspect 'avantageux de l'invention, l'armature est formée d'un noyau moulé lors d'une première étape et d'une couche surmoulée sur ce noyau. Grâce à cet aspect de l'invention, l'armature elle-même est formée d'une structure multi-couches, chaque couche étant d'une épaisseur faible, ce qui permet de diminuer son temps de refroidissement.

Selon un autre aspect avantageux de l'invention, l'armature est pourvue, sur sa surface externe, de moyens d'accrochage de l'enveloppe. Cet aspect de l'invention garantit un accrochage efficace de l'enveloppe sur l'armature et ce qui permet d'éviter toute danger de déformation, voire de rupture du joueur en cours d'utilisation. Dans ce cas, on peut avantageusement prévoir que les moyens d'accrochage sont constitués par des extensions s'étendant vers l'extérieur à partir de la surface externe de l'armature.

Selon un autre aspect avantageux de l'invention, l'enveloppe est partiellement revêtue d'un habillage surmoulé. Cet habillage permet de donner aux joueurs un aspect esthétique amélioré grâce à la formation d'un visage et de cuisses, et de différencier les deux équipes de joueurs montés sur un baby-foot par la couleur de leur maillot et de leurs chaussettes.

L'invention concerne également un jeu de table de type baby-foot comprenant des joueurs tels que précédemment décrits. Un tel jeu est plus économique que ceux de l'art antérieur alors que sa qualité demeure pleinement satisfaisante.

L'invention concerne enfin une installation permettant de mettre en oeuvre le procédé de l'invention pour réaliser un ou plusieurs joueurs conforme à l'invention. Cette installation, qui comporte au moins une presse à injection de matière plastique pourvue d'un moule, est caractérisée en ce que le moule comprend plusieurs empreintes dans lesquelles les joueurs sont successivement installés en cours de fabrication, en vue du moulage d'une armature et du surmoulage d'une enveloppe recouvrant complètement cette armature, ces empreintes étant alimentées soit en matière plastique recyclée, soit en matière plastique neuve alors que des moyens de manipulation internes à la presse sont prévus pour déplacer des armatures ou des corps de joueurs en cours de fabrication lors des ouvertures de la presse.

Avantageusement, le moule comprend une zone de récupération des corps de joueurs en cours de fabrication, cette zone étant accessible depuis l'extérieur du moule alors que le moule est fermé. Cette aspect de l'invention permet de réaliser l'opération d'extraction ou de récupération des joueurs également en temps masqué, pendant l'opération de moulage de l'armature.

L'invention sera mieux comprise et d'autres avantages de celle-ci apparaîtront plus clairement à la lumière de la description qui va suivre d'un mode de réalisation d'une installation de moulage de joueurs de jeu de table du type baby-foot et de son procédé de mise en oeuvre conformes à l'invention, donnée uniquement à titre d'exemple et faite en référence aux dessins annexés dans lesquels :
- la figure 1 est une représentation schématique de principe d'une installation conforme à l'invention ;
- la figure 2 est une coupe selon la ligne II-II à la figure 1 ;
- la figure 3 est une représentation schématique d'un joueur conforme à l'invention lors d'un premier stade de fabrication ;
- la figure 4 est une vue analogue à la figure 3 lors d'un second stade de fabrication ;
- la figure 5 est une vue analogue à la figure 3 lors d'un troisième stade de fabrication ;
- la figure 6 est une vue analogue à la figure 3 lors d'un quatrième stade de fabrication ;
- la figure 7 est une vue analogue à la figure 3 lors d'un cinquième stade de fabrication et
- la figure 8 est une coupe selon la ligne VIII-VIII à la figure 7.

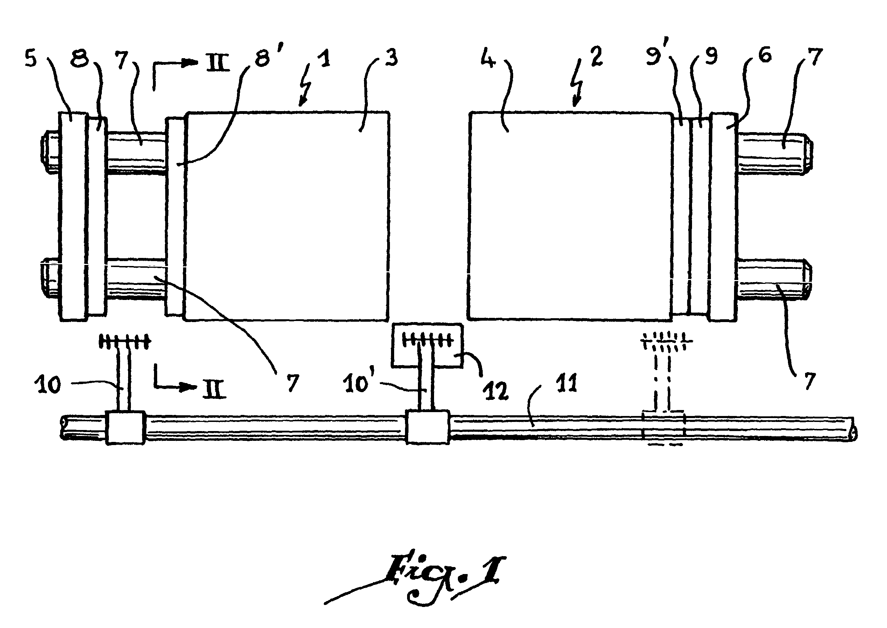

L'installation représentée à la figure 1 comprend deux presses 1 et 2 pourvues chacune d'une partie fixe 3, respectivement, 4 et d'une partie mobile 5, respectivement 6. Les parties mobiles 5 et 6 coulissent le long de colonnes de guidage 7. Sur les faces en regard des parties 3 et 5 d'une part, 4 et 6 d'autre part, sont respectivement montés des éléments 8, 8', 9 et 9' formant moule.

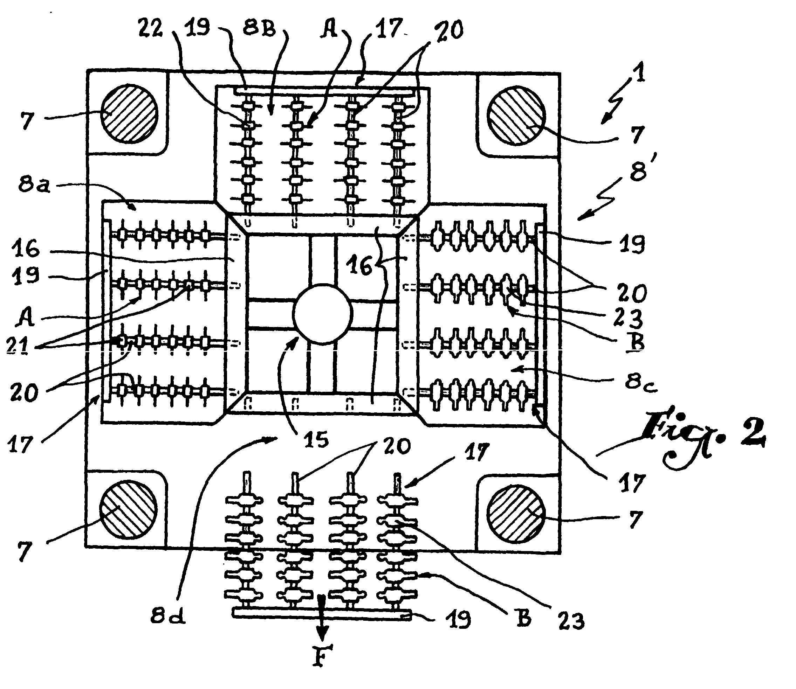

Comme il ressort plus clairement de la figure 2, l'élément 8 comprend plusieurs empreintes 8a, 8b et 8c dans lesquelles peuvent avoir lieu des étapes successives de moulage de joueurs de baby-foot.

Un bras manipulateur 10 permet de déplacer les joueurs en cours de moulage d'une presse à l'autre lorsque la partie mobile 5 est éloignée de la partie fixe 3, c'est-à-dire lorsque le moule 8, 8' de la presse numéro 1 est ouvert. De la même manière, un bras manipulateur 10' permet de réaliser la même opération pour la presse numéro 2. Les bras 10 et 10' sont prévus pour se déplacer le long d'un rail de guidage 11. Les bras 10 et 10' sont synchronisés, c'est-à-dire se déplacent en même temps le long du rail 11. Le bras 10' peut prendre la position représentée en traits mixtes lors des opérations de chargement ou de déchargement de la presse 2. Le bras 10 est alors déplacé vers le milieu du rail 11 sur la figure 1. On note que le moule 8, 8' est ouvert lorsque le moule 9, 9' est fermé et réciproquement. En d'autres termes, les presses 1 et 2 fonctionnent en opposition de phase. Les opérations de moulage réalisées dans la presse 2 le sont en temps masqué par rapport au fonctionnement de la presse 1.

Comme il ressort de la figure 2, une croix de distribution 15 est disposée à l'intérieur de chaque presse 1 ou 2 et comprend quatre barres 16 de réception de supports 17 en forme de râteau. Chaque support: 17 comprend une base 19 et plusieurs barres 20 fantômes des barres sur lesquelles seront montés les joueurs. Le verrouillage des supports 17 a lieu par tout moyen approprié, notamment mécanique, hydraulique ou magnétique.

L'opération de moulage d'un joueur a lieu de la façon suivante.

Un support 17 est introduit dans l'empreinte 8a de la presse numéro 1 par le bras 10. Le moule 8, 8' est alors fermé et de la matière plastique recyclée est injectée dans l'empreinte 8a de façon à former un noyau ou une ébauche 21 pour chaque joueur. Le moule est alors ouvert et le bras manipulateur déplace les grappes de noyaux 21 formées sur les barres 20 de l'empreinte 8a vers l'empreinte 8b avant que le moule ne soit refermé.

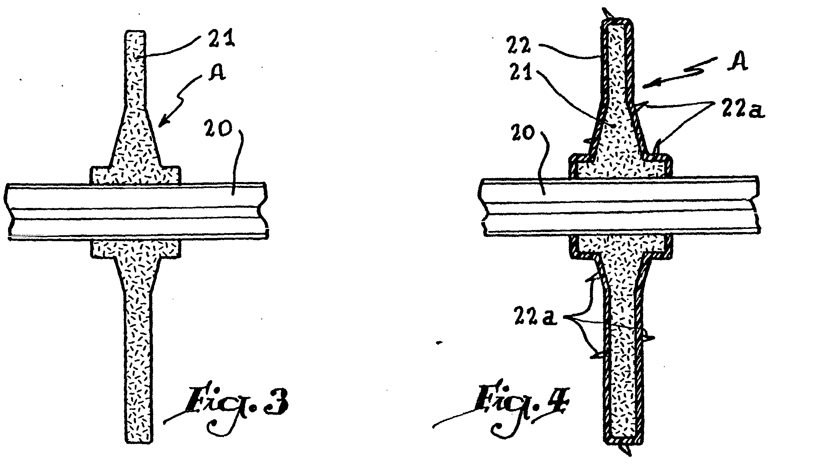

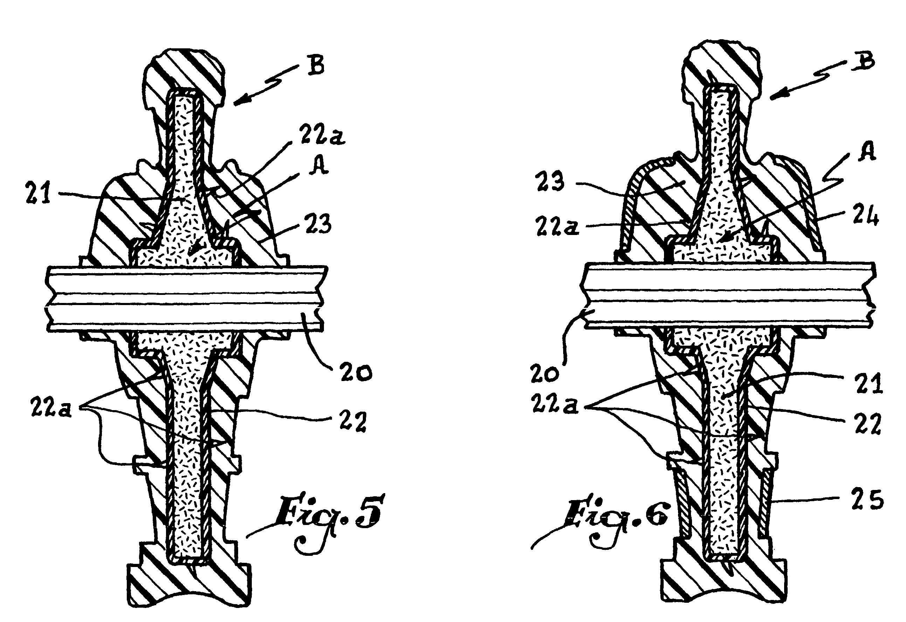

On injecte alors dans l'empreinte 8b une quantité de matière plastique recyclée de façon à surmouler autour du noyau 21 une couche intermédiaire 22. Cette couche, plus particulièrement visible à la figure 4, constitue avec le noyau 21 une armature A en matière plastique recyclée autour de laquelle peut être formé un corps de joueur de baby-foot.

On note que le noyau 21 et la couche intermédiaire 22 sont de masse et d'épaisseur relativement faibles, de sorte que la durée nécessaire à leur refroidissement est courte.

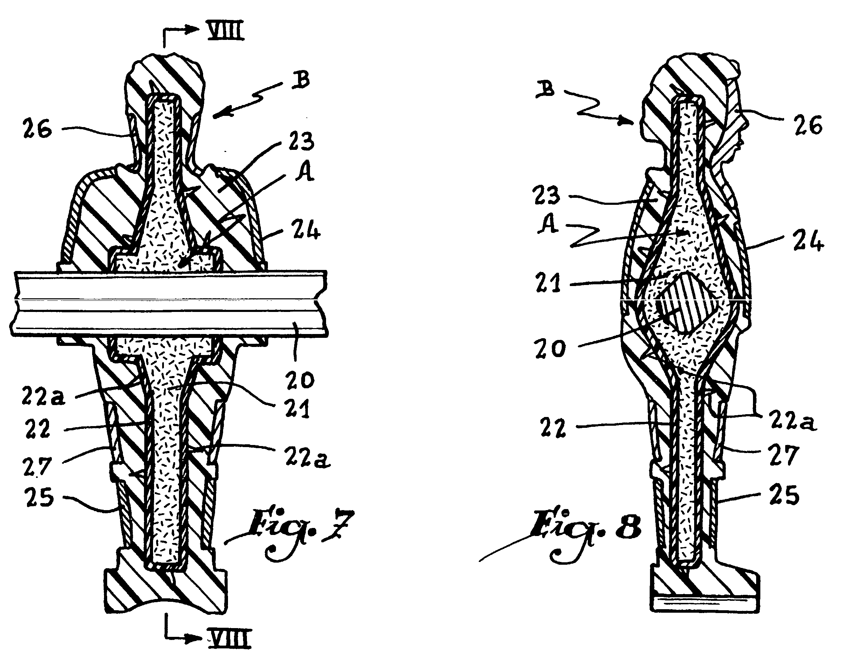

Lors de l'ouverture suivante du moule 8, 8', les grappes d'armatures A formée sur les barres 20 des supports 17 sont déplacées de l'empreinte 8b vers l'empreinte 8c avant que le moule ne soit à nouveau refermé. Lorsque le moule est refermé, on injecte une quantité adaptée de matière plastique neuve, de façon à former autour de l'armature A une enveloppe 23 en matière plastique neuve. Cette enveloppe recouvre complètement l'armature A, de telle sorte qu'elle constitue la partie visible du corps B du joueur ainsi réalisé. A ce stade de la fabrication, le joueur est conforme à la représentation de la figure 5.

Lorsque le moule est à nouveau ouvert, les grappes de joueurs portés par les barres 20 sont déplacées de l'empreinte 8c vers une zone 8d ouverte sur l'extérieure du moule 8, 8', c'est-à-dire accessible lorsque le moule 8, 8' est fermé. Lorsque le moule 8, 8' est fermé pour une étape ultérieure de moulage dans les empreintes 8a, 8b et 8c, il est ainsi possible de retirer le support 17 portant les joueurs en cours de fabrication, comme représenté par la flèche F, afin de les déplacer de la première presse 1 vers un bac intermédiaire 12 de réception des joueurs en cours de fabrication.

Il convient de noter que des opérations de moulage ont eu lieu simultanément dans les empreintes 8a, 8b et 8c. En d'autres termes, lorsqu'un groupe de grappes de joueurs passe de l'empreinte 8a à l'empreinte 8b, un nouveau support 17 comprenant quatre nouvelles barres fantômes 20 est disposé dans l'empreinte 8a de façon à permettre le moulage d'une nouvelle série de noyaux 21, alors qu'une série de couches intermédiaires 22 est moulée sur les noyaux 21 des premières barres 20 dans l'empreinte 8b. De la même manière, des opérations de moulage ont lieu dans les empreintes 8a et 8b lorsqu'un premier support 17 de barres 20 est situé dans l'empreinte 8c. De cette façon, le temps de fabrication apparente de chaque corps de joueur est égal au temps de fabrication de la plus longue des opérations unitaires réalisées dans les empreintes 8a, 8b ou 8c. En pratique, l'opération la plus longue est le moulage des noyaux 21, car ce noyau a une épaisseur supérieure à celles de la couche 22 ou de l'enveloppe 23.

Le fonctionnement de la presse numéro 2 est analogue. Le bras manipulateur 10' récupère dans le bac 12 des grappes de joueurs en cours de moulage et introduit ces grappes dans une première empreinte de l'élément 9. Dans cet élément, des couches de matière colorée 24 et 25 sont surmoulées sur l'enveloppe 23 à l'emplacement du maillot et des chaussettes du joueur. On comprend que les couches 24 et 25 peuvent être réalisées en des couleurs différentes, de façon à permettre une différenciation des joueurs appartenant à des équipes opposées sur un baby-foot.

Les grappes de joueurs sont ensuite déplacées vers une seconde empreinte du moule 9, 9' dans laquelle il est procédé au surmoulage de couches 26, 27 de matière plastique colorée en rose clair destinées à représenter le visage et les cuisses des joueurs.

Ainsi, et comme il ressort plus clairement de la figure 8, le joueur réalisé grâce au procédé de l'invention comprend une armature A formée des éléments 21 et 22 et une enveloppe 23 partiellement revêtue d'éléments d'habillage 24 à 27.

On note aux figures 4 à 8 que des picots ou barbes 22a s'étendent vers l'extérieur à partir de la surface externe 22b de la couche 22 ; ces picots ou barbes ont pour fonction d'améliorer l'accrochage de l'enveloppe 23 sur l'armature A.

Compte tenu de ce qui précède, on comprend que l'armature A du joueur réalisé conformément à l'invention est de prix de revient faible, par rapport aux corps de joueurs de la technique connue puisqu'elle est constituée de matière plastique recyclée. En revanche, le joueur obtenu grâce à l'invention présente un aspect conforme aux habitudes dans le domaine du baby-foot, puisque la matière utilisée pour la réalisation de l'enveloppe 23 est neuve, donc homogène et de couleur précisément définie. Enfin, le corps d'un joueur conforme à l'invention est fabriqué plus rapidement que ceux de l'art antérieur.

Il est également possible de réaliser l'enveloppe 23 en matière plastique recyclée en choisissant un matériau homogène et d'aspect acceptable. Dans ce cas, un colorant noir est incorporé à la matière plastique destinée à former cette enveloppe ; sa couleur est alors bien déterminée et uniforme pour tous les joueurs alors que le prix de revient de chaque joueur est optimisé.

## Revendications

1. Procédé de moulage de joueurs de jeu de table du type baby-foot, **caractérisé en ce qu**'il consiste à mouler une armature (A) de joueur à partir de matière plastique recyclée et à surmouler une enveloppe (23) de couleur déterminée sur ladite armature, de façon à recouvrir complètement ladite armature.

2. Procédé selon la revendication 1, **caractérisé en ce que** la ou les opération(s) de surmoulage est ou sont réalisée(s) en temps masqué par rapport à l'opération de moulage de l'armature (A) ou du noyau (21) de l'armature d'un autre joueur.

3. Joueur de jeu de table du type baby-foot, réalisé selon le procédé de l'une des revendications précédentes.

4. Joueur de jeu de table du type baby-foot **caractérisé en ce qu**'il est constitué d'une structure multi-couches (21-27) comprenant une armature (A), moulée à partir de matière recyclée, et une enveloppe (23) surmoulée sur ladite armature et recouvrant complètement ladite armature.

5. Joueur selon la revendication 4, **caractérisé en ce que** ladite armature (A) est formée d'un noyau (21) moulé lors d'une première étape et d'une couche (22) surmoulée sur ledit noyau.

6. Joueur selon la revendication 4, **caractérisé en ce que** ladite armature (A) est pourvue, sur sa surface externe (22b), de moyens d'accrochage (22a) de ladite enveloppe.

7. Joueur selon la revendication 6, **caractérisé en ce que** lesdits moyens d'accrochage sont constitués par des extensions (22a) s'étendant vers l'extérieur à partir de ladite surface externe (22b) de ladite armature (A).

8. Joueur selon la revendication 4, **caractérisé en ce que** ladite enveloppe (23) est partiellement revêtue d'au moins un habillage surmoulé (24-27).

9. Jeu de table de type baby-foot, **caractérisé en ce qu**'il comprend des joueurs selon l'une au moins des revendications 3 à 8.

10. Installation de moulage de joueurs de jeu de table de type baby-foot comportant au moins une presse (1, 2) à injection de matière plastique pourvue d'une moule (8, 8', 9, 9'), **caractérisée en ce que** ledit moule comprend plusieurs empreintes (8a, 8b, 8c) dans lesquelles lesdits joueurs sont successivement installés en cours de fabrication en vue du moulage d'une armature (A) et du surmoulage d'une enveloppe (23) recouvrant complètement ladite armature, lesdites empreintes étant alimentées soit en matière plastique recyclée, soit en matière plastique neuve, alors que des moyens (15-17) de manipulation internes à ladite presse sont prévus pour déplacer les armatures (A) ou les corps (B) de joueurs en cours de fabrication lors des ouvertures de ladite presse.

11. Installation selon la revendication 10, **caractérisée en ce que** ledit moule (8, 8', 9, 9') comprend une zone (8d) de récupération des corps de joueurs en cours de fabrication, ladite zone étant accessible depuis l'extérieur dudit moule alors que ledit moule est fermé.

## Claims

1. Process for moulding table-game players of the table-football type, **characterized in that** it consists in moulding a player reinforcement (A) from recycled plastic and in overmoulding a jacket (23) of defined colour onto the said reinforcement, so as to completely cover the said reinforcement.

2. Process according to Claim 1, **characterized in that** the overmoulding operation or operations is or are carried out in parallel time with respect to the operation of moulding the reinforcement (A) or the core (21) of the reinforcement of another player.

3. Table-game player of the table-football type, produced according to the process of either of the preceding claims.

4. Table-game player of the table-football type, **characterized in that** it consists of a multilayer structure (21 - 27) comprising a reinforcement (A), moulded from recycled material, and a jacket (23) overmoulded onto the said reinforcement and completely covering the said reinforcement.

5. Player according to Claim 4, **characterized in that** the said reinforcement (A) is formed from a core (21) moulded during a first step and a layer (22) overmoulded onto the said core.

6. Player according to Claim 4, **characterized in that** the said reinforcement (A) is provided, on its external surface (22b), with means (22a) for catching the said jacket.

7. Player according to Claim 6, **characterized in that** the said catching means consist of extensions (22a) extending outwards from the said external surface (22b) of the said reinforcement (A).

8. Player according to Claim 4, **characterized in that** the said jacket (23) is partly coated with at least one overmoulded trim (24 - 27).

9. Table game of the table-football type, **characterized in that** it comprises players according to at least one of Claims 3 to 8.

10. Plant for moulding table-game players of the table-football type, comprising at least one injection-moulding machine (1, 2) for injecting plastic into a mould (8, 8' 9, 9'), **characterized in that** the said mould comprises several cavities (8a, 8b, 8c) in which the said players are placed in succession during manufacture for the purpose of moulding a reinforcement (A) and overmoulding a jacket (23) completely covering the said reinforcement, the said cavities being supplied either with recycled plastic or with fresh plastic, while manipulating means (15 - 17) internal to the said injection-moulding machine are provided for moving the reinforcements (A) or the bodies (B) of players during manufacture, when the said injection-moulding machine is opened.

11. Plant according to Claim 10, **characterized in that** the said mould (8, 8', 9, 9') comprises a zone (8d) for recovering the bodies of players during manufacture, the said zone being accessible from outside the said mould while the said mould is closed.

## Patentansprüche

1. Formverfahren für einen Tischfussballspieler vom Typ Baby-Fussball, **dadurch gekennzeichnet,** dass ein Spielerrohling (A) ausgehend von recyceltem Kunststoff zu formen und eine Hülle (23) bestimmter Farbe über diesen Rohling zu giessen ist, damit dieser Rohling vollständig umschlossen ist.

2. Verfahren nach Anspruch 1, **dadurch gekennzeichnet**, daß der oder die Abguss-Arbeitsgang(-gänge) im Vergleich zum Formvorgang des Rohlings (A) oder des Kerns (21) des Rohlings eines anderen Spielers beim Ummantelungstakt durchgeführt wird (werden).

3. Nach dem Verfahren eines der vorhergehenden Ansprüche hergestellter Tischfussballspieler vom Typ Baby-Fussball.

4. Tischspielfussballspieler vom Typ Baby-Fussball **dadurch gekennzeichnet,** dass er aus einem viellagigen Aufbau (21-27) besteht und einen Rohling (A) umfasst, der aus recyceltem Kunststoff geformt ist, sowie eine von diesem Rohling abgegossene Hülle (23) und dieser Rohling vollständig umschlossen ist.

5. Spieler nach Anspruch 4, **dadurch gekennzeichnet,** daß der Rohling (A) aus einem Kern gebildet ist, der in einer ersten Etappe geformt wird und einer Lage (22), mit der der Kern umgossen ist.

6. Spieler nach Anspruch 4, **dadurch gekennzeichnet**, daß der Rohling (A) auf seiner äusseren Oberfläche (22b) mit Mitteln (22a) zum Verhaken der Hülle versehen ist.

7. Spieler nach Anspruch 6, **dadurch gekennzeichnet**, daß die Mittel zum Verhaken durch nach aussen abstehende Überstände (22a) gebildet sind, ausgehend von besagter äusseren Oberfläche (22b) des Rohlings (A).

8. Spieler nach Anspruch 4, **dadurch gekennzeichnet**, daß die Hülle (23) teilweise mit mindestens einer umgossenen Umkleidung bedeckt ist.

9. Tischspiel vom Typ Baby-Fussball, **dadurch gekennzeichnet**, dass es Spieler nach mindestens einem der Ansprüche 3 bis 8 umfasst.

10. Formvorrichtung für Tischspieler vom Typ Baby-Fussball, die mindestens eine Kunststoff-Einspritzpresse, (1,2) versehen mit einer Form (8, 8', 9, 9') umfasst, **dadurch gekennzeichnet**, dass die Form mehrere Vertiefungen (8a, 8b, 8c) aufweist, in denen die Spieler im Fertigungsablauf beim Formen eines Rohlings (A) und des Umgiessens mit einer Hülle (23), die den Rohling vollständig umschliesst, nacheinander aufgestellt; die Vertiefungen entweder mit recyceltem Kunststoff oder mit neuem Kunststoff versorgt werden, während interne Bedienungsmittel (15-17) der Presse vorgesehen sind, um die Rohlinge (A) oder die Körper (B) der Spieler im Fertigungsablauf zu verschieben, wenn sich die Presse öffnet.

11. Vorrichtung nach Anspruch 10, **dadurch gekennzeichnet**, dass die Form (8, 8', 9, 9') eine Rückgewinnungszone (8d) für die Spielerkörper im Fertigungsablauf umfasst und diese Zone dann der Aussenseite der Form zugänglich ist, während die Form geschlossen ist.
